# FASCICULE DE BREVET EUROPEEN

(11) **EP 1 493 304 B1**
(45) Date de publication et mention de la délivrance du brevet: **18.01.2012**
(21) Numéro de dépôt: 03740586.7
(22) Date de dépôt: 09.04.2003
(51) Int. Cl.: H05B 3/16, H05B 1/02, F24H 9/20, F24H 3/04

(54) **DISPOSITIF DE CHAUFFAGE ELECTRIQUE, NOTAMMENT POUR APPAREIL DE CHAUFFAGE ET OU CLIMATISATION DE VEHICULE**
ELEKTRISCHES HEIZGERÄT, INSBESONDERE FÜR EINE FAHRZEUGHEIZUNG ODER EINE FAHRZEUGKLIMAANLAGE
ELECTRIC HEATING DEVICE, PARTICULARLY FOR A HEATING OR AIR-CONDITIONING UNIT IN A VEHICLE

(30) Priorité: 11.04.2002 FR 0204554
(43) Date de publication de la demande: 05.01.2005
(73) Titulaire: VALEO SYSTEMES THERMIQUES, 78321 Le Mesnil Saint Denis (FR)
(72) Inventeur: PIERRON, Frédéric, F-78120 Rambouillet (FR); TERRANOVA, Gilbert, F-78610 Le Perray-en-Yvelines (FR); COLETTE, Olivier, F-78320 Le Mesnil Saint Denis (FR); MARANGE, Christophe, F-78400 Chatou (FR)
(86) Numéro de dépôt international: PCT/FR2003/001125
(87) Numéro de publication internationale: WO 2003/086018

(56) Documents cités:
- EP-A- 1 157 869
- DE-A- 19 738 318
- DE-A- 19 925 757
- FR-A- 2 690 112
- FR-A- 2 742 384
- FR-A- 2 814 802
- GB-A- 941 580
- GB-A- 2 098 436
- GB-A- 2 177 880
- US-A- 3 214 572
- US-A- 3 651 304
- US-A- 4 963 716
- US-A- 5 334 818
- BURK R ET AL: "INTEGRALES KLIMASYSTEM FUER ELEKTROAUTOMOBILE" , ATZ AUTOMOBILTECHNISCHE ZEITSCHRIFT, FRANCKH'SCHE VERLAGSHANDLUNG. STUTTGART, DE, VOL. 94, NR. 11, PAGE(S) 582-588 XP000321845 ISSN: 0001-2785 figure 11

## Description

### Arrière-plan de l'invention

L'invention concerne un dispositif de chauffage électrique comprenant un radiateur électrique traversé par l'air à chauffer et en particulier, traversé par au moins une partie d'un flux d'air produit par un générateur de flux d'air, tel qu'un pulseur ou ventilateur.

Le domaine d'application de l'invention est plus particulièrement celui des appareils de chauffage et/ou climatisation de véhicules, notamment véhicules automobiles de tourisme, utilitaires et poids lourds.

De façon habituelle, le réchauffage de l'air destiné au chauffage de l'habitacle d'un véhicule automobile, ainsi qu'au désembuage et au dégivrage est assuré par passage d'un flux d'air à travers un échangeur de chaleur parcouru par le liquide de refroidissement du bloc-moteur.

Ce mode de chauffage peut s'avérer inadapté ou insuffisant dans plusieurs situations telles que :
- préconditionnement avant démarrage du moteur pour assurer un réchauffement de l'habitacle, ainsi qu'un dégivrage ou désembuage, de façon télécommandée ou pré-programmée, avant utilisation du véhicule en environnement très froid,
- montée très rapide souhaitée de la température dans l'habitacle,
- incapacité de l'échangeur de chaleur à fournir les calories nécessaires à un réchauffage satisfaisant de l'air pour assurer les fonctions de chauffage ainsi que de dégivrage et désembuage éventuels, comme cela se produit pendant un certain temps après démarrage, avec certains types de moteurs à faible déperdition thermique.

Pour pallier ces inconvénients, une solution connue, entre autres, consiste à adjoindre à l'échangeur de chaleur un radiateur électrique disposé en aval de l'échangeur dans le conduit de circulation d'air à réchauffer. Le fonctionnement du radiateur électrique est commandé de façon temporaire, jusqu'à ce que l'échangeur de chaleur puisse seul assurer le chauffage de l'air de façon requise.

De façon habituelle, un tel radiateur électrique complémentaire utilise des éléments résistifs sous forme de résistances à coefficient de température positif (CTP). L'utilisation de résistances CTP permet en effet une autolimitation en température de sorte qu'un échauffement excessif est évité. Les résistances CTP se présentent sous forme de petits blocs ou "pierres", disposés dans des barreaux chauffants, entre deux électrodes. Des éléments radiants sont associés aux barreaux pour favoriser l'échange calorifique avec le flux d'air traversant le radiateur. Ces éléments radiants peuvent être des ailettes traversées par les barreaux ou encore des intercalaires par exemple sous forme de rubans métalliques plissés ou ondulés disposés entre barreaux parallèles. De tels radiateurs électriques sont notamment connus de DE 199 25 757 et DE 197 38 318.

Les radiateurs électriques additionnels à résistances CTP fonctionnent de façon satisfaisante mais présentent l'inconvénient d'être d'un prix de revient élevé en raison du coût des résistances CTP, du nombre de pièces constitutives, du temps d'assemblage nécessaire, et de la sensibilité à la corrosion des électrodes d'alimentation des résistances CTP.

### Objet et résumé de l'invention

L'invention a pour but de fournir un radiateur électrique pour appareil de chauffage ou de climatisation de véhicule ou, d'une façon plus générale pour appareil de chauffage de tout type d'habitacle qui soit d'un coût compétitif par rapport à celui des radiateurs électriques à résistances CTP et qui présente une architecture simplifiée en comparaison avec ces derniers tout en permettant une optimisation des échanges thermiques avec de l'air à réchauffer.

Un autre but de la présente invention est de limiter le nombre de pièces du radiateur, facilitant ainsi son montage et réduisant les coûts de fabrication.

Ces buts sont atteints grâce à un dispositif de chauffage qui comporte un radiateur électrique pour chauffer l'air le traversant, ledit radiateur comprenant un boîtier, au moins un élément résistif monté dans le boîtier et constitué par au moins un ruban métallique en zigzag qui est disposé de manière à être exposé directement à l'air traversant le boîtier, et un circuit de commande d'alimentation électrique du ou des éléments résistifs relié à une source d'alimentation, tel que le radiateur électrique comprend un ensemble de modules chauffants individuels disposés parallèlement les uns aux autres dans le boîtier et de manière à être exposés directement à l'air traversant le boîtier, chaque module chauffant comprenant un ruban métallique plissé ou ondulé et un interrupteur électronique commandé par le circuit de commande destiné à interdire sélectivement l'alimentation électrique du ruban métallique, et caractérisé en ce que

chaque module chauffant comprend en outre, un support électriquement isolant comprenant un profilé destiné à accueillir et à maintenir en position ledit ruban métallique et intégrant un support métallique de connexion reliée à la source d'alimentation électrique permettant l'alimentation électrique du ruban métallique.

Avantageusement, le profilé présente des ailes entre lesquelles les sommets des ondulations sont maintenus latéralement et des séparations pour maintenir une certaine régularité du pas du ruban métallique ondulé ou plissé.

Chaque module chauffant comporte au moins un élément de protection thermique et électrique, exposé directement à l'air traversant le module chauffant et en série avec le ruban métallique.

L'élément de protection comporte au moins une liaison thermofusible en série avec un ruban métallique.

De préférence, l'élément de protection comprend une lame ressort et une liaison thermofusible formée par une brasure entre une extrémité du ruban métallique et une extrémité de la lame ressort, l'autre extrémité de la lame ressort étant solidaire du support et connectée électriquement à une borne.

La brasure de la liaison thermofusible présente un point de fusion en adéquation avec une limite supérieure de température et peut être formée par une soudure eutectique.

Avantageusement, la lame ressort est exposée directement à l'air traversant le module chauffant et des ouvertures en forme de persiennes sont formées dans la lame ressort

La lame ressort présente une section inférieure ou égale et une résistivité supérieure ou égale à celle du ruban métallique.

L'interrupteur électronique est intégré sur le support métallique de connexion à travers des pistes formées par ledit support métallique et des ailes sont formées dans support métallique facilitant la dissipation de chaleur de l'interrupteur électronique par l'air traversant le module chauffant.

L'extrémité de la lame ressort solidaire du support peut être soudé de manière permanente à la borne de connexion, indépendante électriquement du support métallique de connexion, permettant ainsi le raccordement électrique du ruban ou de la lame ressort à une borne externe ou bus barre.

De préférence, chaque module chauffant comporte en outre au moins une protection de type réversible ou réarmable liée directement ou indirectement au ruban métallique prévenant un échauffement excessif. Cette protection peut être un capteur ou détecteur thermique délivrant une information au circuit de commande, en adéquation avec la température du ruban métallique ou de la lame ressort afin que le circuit de commande coupe l'alimentation électrique au cas d'un échauffement excessif.

Le capteur ou détecteur thermique est thermiquement lié à la lame ressort et comprend un élément choisi parmi une résistance CTN, une résistance CTP, un bilame et un interrupteur polymère à effet CTP.

Avantageusement, la lame ressort possède un effet CTP assurant ainsi, la fonction d'un capteur thermique.

Chaque module chauffant peut présenter une puissance de chauffe comprise entre 0 et 500W et de préférence entre 300W et 400W.

Le boîtier comporte un ensemble d'alvéoles destinées à accueillir et à maintenir en place chaque module chauffant à l'aide aussi d'un couvercle.

Le circuit de commande peut comprendre des moyens de variation de la puissance fournie par le radiateur par modulation de la tension d'alimentation délivrée à chaque module chauffant, par exemple par la technique de modulation de largeur d'impulsions, ce qui permet de faire varier la puissance de façon continue ou quasi-continue.

Avantageusement, les différents modules chauffants comportent des rubans métalliques ayant des résistances sensiblement identiques.

De préférence, chaque ruban métallique de chaque module chauffant présente un pas d'ondulation de longueur comprise entre 1,8 mm et 6 mm ; une amplitude crête à crête entre sommets d'ondulations comprise entre 5 mm et 20 mm ; une largeur comprise entre 5 mm et 20 mm ; et une épaisseur comprise entre 50 µm et 250 µm et de préférence entre 80 µm et 180 µm.

Chaque ruban métallique est en un matériau choisi parmi un alliage à base de fer et un alliage à base de cuivre.

De préférence encore, l'alliage à base de cuivre est un alliage choisi parmi le CuNi30, le CuNi45 et le CuNi18Zn20.

Avantageusement, le matériau est un alliage présentant un effet de résistance à coefficient de température positif.

Selon un mode de réalisation préféré, des ouvertures en forme de persiennes sont formées dans chaque ruban. Les persiennes comportent des ailettes qui forment un angle compris entre 20° et 35° par rapport au plan du ruban.

Avantageusement, chaque ruban est muni d'un revêtement isolant électrique et/ou de protection contre la corrosion.

Chaque ruban métallique présente un profil choisi parmi, un profil sinusoïdal, un profil triangulaire, un profil rectangulaire et un profil trapézoïdal. Selon un mode de réalisation préféré, le dispositif de chauffage comprend en outre un générateur de flux d'air, caractérisé en ce que les interrupteurs électriques pilotés par le circuit de commande interdisent l'alimentation électrique des modules chauffants lorsque le débit d'air traversant le radiateur est inférieur à une valeur minimale, afin d'assurer une protection contre un échauffement excessif.

Selon une particularité du dispositif de chauffage, le générateur de flux d'air comporte un pulseur caractérisé en ce que des moyens sont prévus pour fournir au circuit de commande un signal représentatif de la vitesse de rotation du pulseur pour interdire l'alimentation électrique des modules chauffants lorsque la vitesse de rotation du pulseur est inférieure à un seuil prédéterminé.

L'invention a aussi pour objet un appareil de chauffage ou climatisation de véhicule automobile utilisant un dispositif de chauffage tel que défini ci-avant.

Dans un tel appareil de chauffage ou climatisation, le radiateur du dispositif de chauffage peut être disposé dans un canal de circulation d'air en aval d'un éventuel échangeur de chaleur à liquide.

Selon une particularité de l'appareil de chauffage ou climatisation, le radiateur électrique peut être logé à proximité d'une bouche de sortie d'air.

### Brève description des dessins

L'invention sera mieux comprise à la lecture de la description faite ci-après, à titre indicatif mais non limitatif, en référence aux dessins annexés, sur lesquels :
- la figure 1 est une vue partielle très schématique d'un appareil de chauffage pour véhicule automobile ;
- les figures 2 et 3 sont des vues en perspective d'un mode de réalisation d'un radiateur électrique pour un dispositif de chauffage selon l'invention ;
- la figures 4 et 5 sont des vues en perspective d'un module chauffant du radiateur des figures 2 et 3 ;
- la figure 6 est une vue de détail partielle d'un profilé du module chauffant des figures 4 et 5 ;
- la figure 7 est une vue en plan partielle du radiateur électrique des figures 2 et 3;
- les figures 8 et 9 sont des vues de détail partielles montrant des variantes de réalisation d'une liaison thermofusible de protection du radiateur contre un échauffement excessif ;
- la figure 10 est une vue de détail partielle montrant une protection réversible en plus de la liaison thermofusible de protection de la figure 8 ;
- la figure 11 est une vue en perspective d'un boîtier d'un radiateur électrique des figures 2 et 3:
- les figures 12 et 13 sont des vues de détail partielles montrant le positionnement d'un module chauffant du radiateur des figures 2 et 3 ;
- la figure 14 est une vue en plan partielle, à échelle agrandie, d'un ruban métallique avec persienne pour un module chauffant des figures 4 et 5 (à l'état non plissé) ;
- la figure 15 est une vue en coupe suivant le plan XV-XV de la figure 14 ;
- la figure 16 est un mode de réalisation d'un schéma électrique d'un radiateur d'un dispositif de chauffage selon l'invention ; et
- la figure 17 illustre très schématiquement un autre mode de réalisation d'un appareil de chauffage et/ou climatisation utilisant un dispositif de chauffage selon l'invention.

### Description détaillée des modes de réalisation

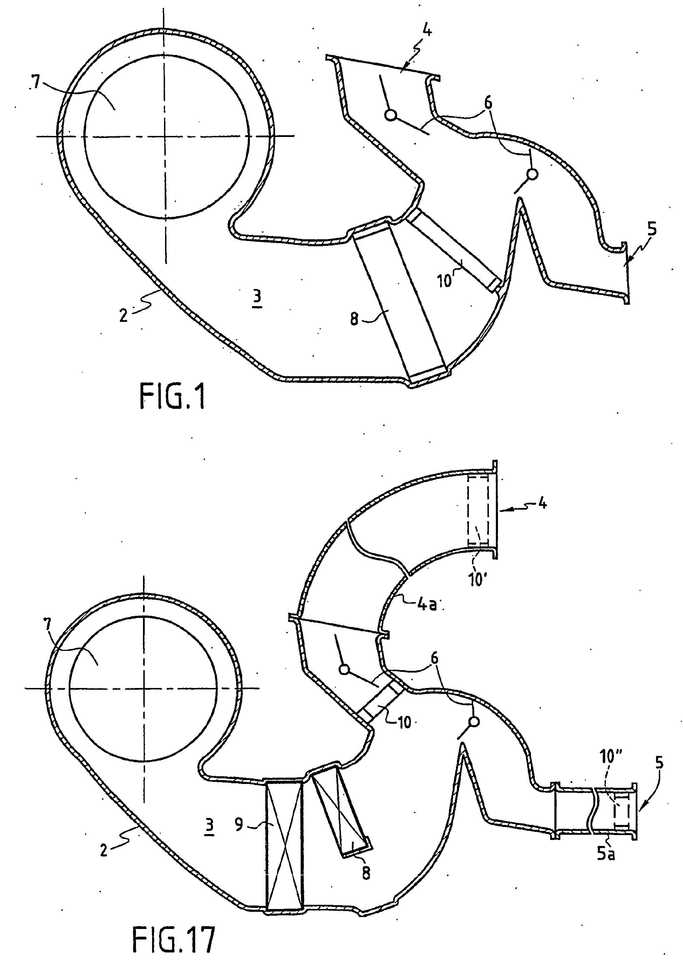

La figure 1 montre une partie d'un appareil de chauffage de véhicule automobile, comprenant un boîtier 2 délimitant un canal 3 pour le passage d'air à réchauffer. Le canal 3 amène l'air vers des bouches de chauffage et de désembuage/dégivrage pour être distribué sélectivement dans l'habitacle selon les positions de volets de mixage et distribution 6. Le débit d'air dans le canal 3 est produit par un ventilateur 7, ou pulseur, recevant de l'air extérieur ou de l'air de recirculation en provenance de l'habitacle. Le réchauffage de l'air, lorsqu'il est nécessaire, est assuré par un échangeur de chaleur à liquide éventuel 8, utilisant le liquide de refroidissement du moteur comme liquide caloporteur et par un radiateur électrique 10. L'échangeur 8 et le radiateur électrique 10 sont disposés dans le canal 3, le premier étant situé en amont du second. En l'absence d'échangeur 8, le chauffage de l'air est assuré par le seul radiateur électrique 10.

Le radiateur électrique 10 peut occuper tout ou partie de la section de passage du canal 3. Dans ce dernier cas, seule une partie du flux d'air produit par le pulseur 7 traverse le radiateur électrique, l'autre partie étant dérivée à l'extérieur de celui-ci.

Un mode de montage d'un radiateur électrique dans un appareil de chauffage et climatisation est décrit notamment dans la demande de brevet français n° 01 09 076 de la déposante.

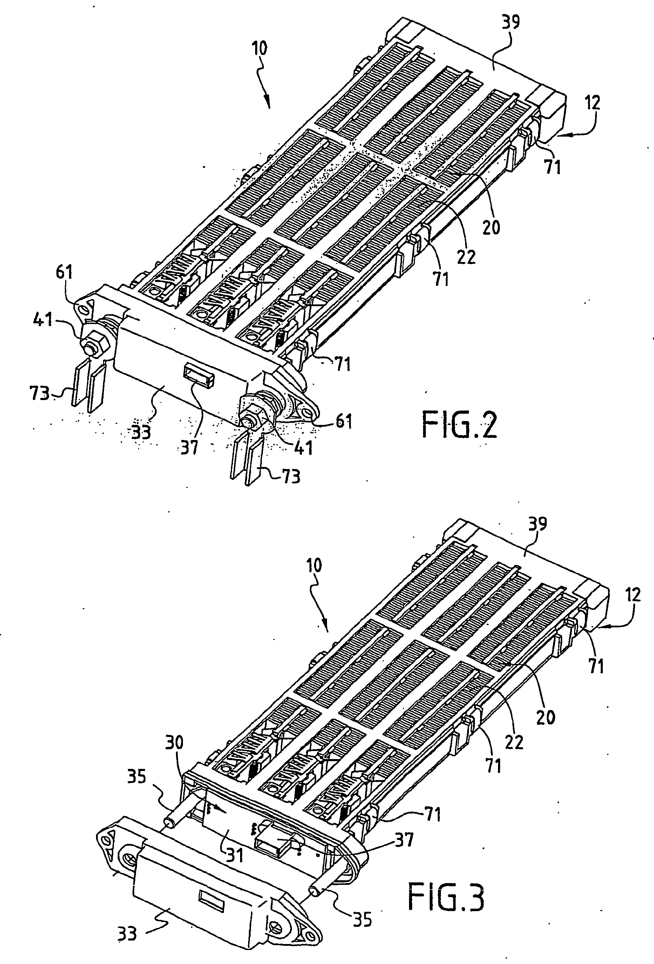

Un exemple de réalisation d'un radiateur électrique 10 conforme à l'invention sera maintenant décrit en référence aux figures 2 à 15.

Comme le montrent les figures 2 et 3, le radiateur électrique 10 comprend un boîtier 12, par exemple en plastique dans lequel est logé un ensemble de modules chauffants individuels 20. Les modules chauffants individuels 20 sont disposés parallèlement les uns aux autres et s'étendent sur toute la longueur du boîtier 12, de manière à être exposés directement à l'air traversant ce boîtier.

Le contrôle du radiateur électrique 10 est assuré par un circuit de commande 30 monté sur une plaque 31 de circuit imprimé avantageusement logé dans l'un des côtés du boîtier 12 et protégé par un capot 33.

Le circuit de commande 30 reçoit des informations à travers un connecteur 37 et est relié à une source d'alimentation à travers des bus barres 35 ou à travers le connecteur.

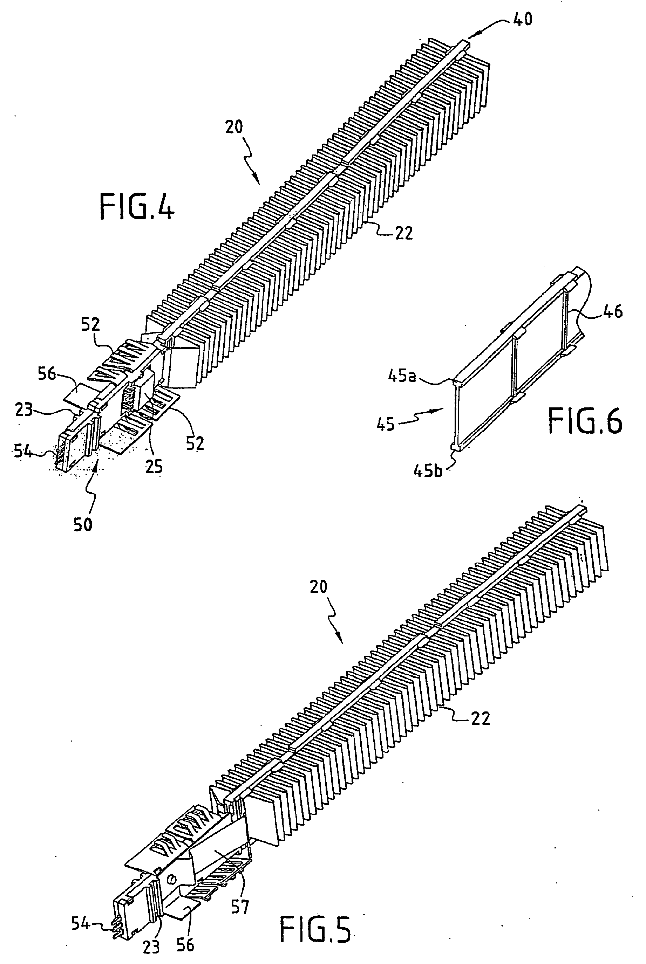

Comme le montrent les figures 4 et 5, chaque module chauffant individuel 20 comprend un ruban métallique 22 de préférence, plissé ou ondulé et un interrupteur électronique ou commutateur 25, par exemple sous forme de transistor de puissance. L'interrupteur électronique 25 est commandé par le circuit de commande 30 afin d'interdire sélectivement l'alimentation électrique du ruban métallique 22.

Avantageusement, les différents modules chauffants comportent des rubans métalliques 22 ayant des résistances sensiblement identiques et une puissance de chauffe comprise entre 0 et 500W et de préférence entre 300W et 400W.

Le module chauffant individuel 20 comprend un support 40 électriquement isolant comprenant un profilé rigide 45 destiné à accueillir et à maintenir en position un même ruban continu.

Le profilé 45, comme le montre la figure 6, est à section en forme de H et présente des ailes 45a, 45b entre lesquelles les sommets des ondulations sont maintenus latéralement. Ainsi, le ruban continu est disposé en deux rangées, en serpentant autour des côtés latéraux du profilé 45. Le ruban 22 est retourné ou recourbé à un bout du profilé 45. En variante, le ruban peut être en deux segments soudés au bout du profilé 45.

Le profilé 45 intègre des séparations 46 permettant de caler le ruban 22 et de maintenir une certaine régularité du pas d'ondulation du ruban.

Ainsi, le support isolant 40 participe au maintien, au guidage et à l'ancrage du ruban métallique 22 de façon mécanique.

Toutefois, le ruban 22 peut être fixé au profilé 45 par collage de sommets d'ondulations sur ce profilé afin de limiter les vibrations génératrices de bruit.

L'alimentation électrique du ruban est réalisée via un support métallique 50 de connexion conductrice d'électricité, par exemple en cuivre ou un de ses alliages. Le support métallique 50 de connexion est intégrée dans le support isolant 40 par surmoulage ou par d'autres procédés connus.

L'interrupteur électronique 25 est intégré sur le support métallique 50 de connexion à travers des pistes, non représentées, formées par cette support métallique.

En outre, des ailes dissipatrices 52 et des bornes de connexions 54 sont découpées dans le support métallique 50. Les ailes dissipatrices 52 facilitent la dissipation de chaleur de l'interrupteur électronique par l'air traversant le module chauffant individuel 20, tandis que les bornes de connexions 54 relient ce module chauffant individuel au circuit de commande 30.

La protection du radiateur contre un échauffement excessif est assurée par le circuit de commande 30 et les interrupteurs électroniques 25 comme cela sera expliqué plus loin. Toutefois, dans un souci de sécurité maximale, une protection supplémentaire contre un échauffement excessif du radiateur est prévue au moyen d'au moins un élément de protection thermique et électrique dans chaque module chauffant individuel. Cet élément de protection doit être en série avec le ruban métallique et de préférence, doit être directement exposé à l'air traversant le module chauffant.

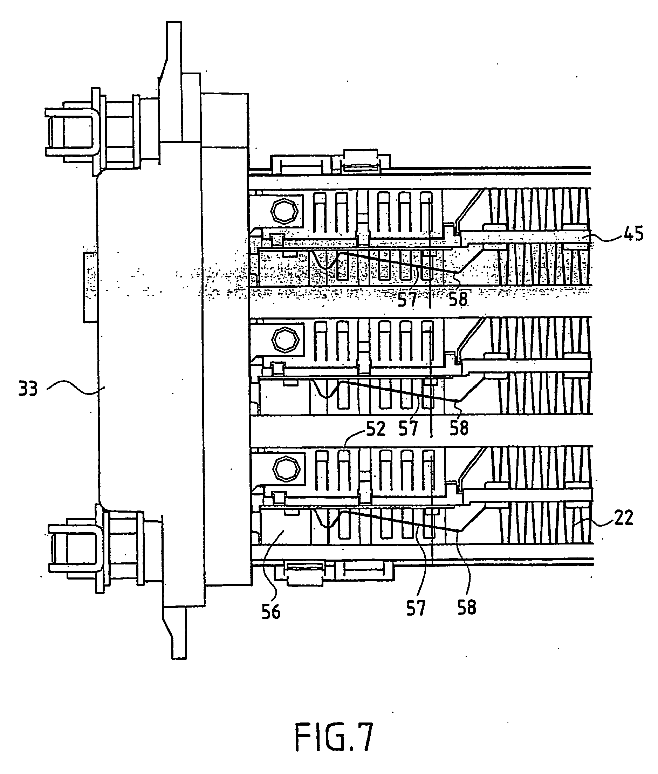

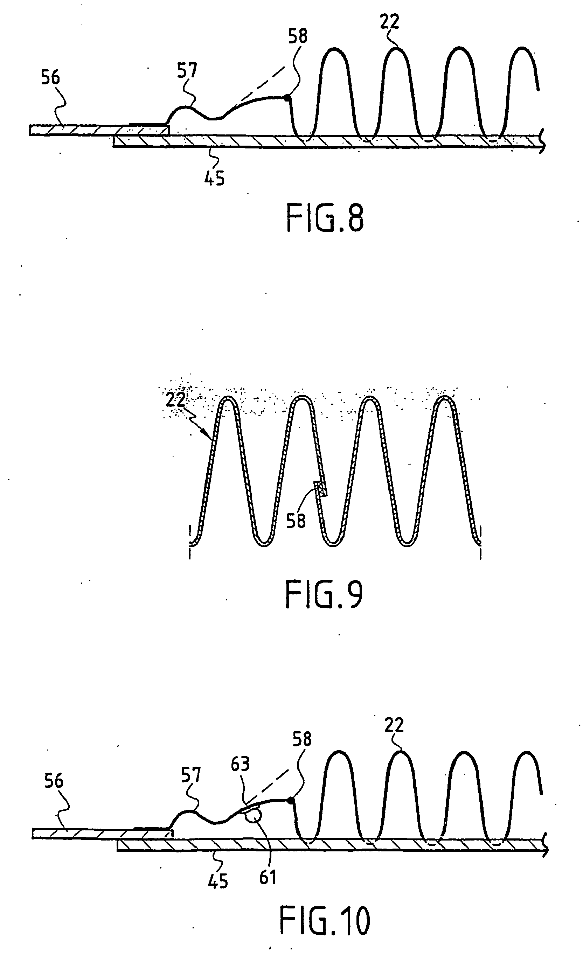

Les figures 7 et 8 montrent un exemple d'un élément de protection constitué d'une lame ressort 57 et d'une liaison thermofusible 58 formée par une brasure entre une extrémité du ruban métallique 22 et une extrémité de la lame ressort 57. L'autre extrémité de la lame ressort 57 est fixée par exemple, par une soudure permanente sur une borne de raccordement 56 qui est solidaire du support 40 du ruban métallique 22. La borne de raccordement 56 relie le ruban 22 à un bus barre 35 et est électriquement indépendante du support métallique 50 de connexion.

La composition de brasure utilisée pour la liaison électrique est choisie, de sorte que cette brasure possède un point de fusion précis à une température représentant une limite supérieure de température admissible. Cette limite étant fixée de sorte que la protection par ouverture de la liaison thermofusible soit celle qui agit en dernier. A titre d'exemple, la liaison thermofusible 58 peut être formée par une soudure eutectique telle que sa température de fusion est d'environ 165°C.

En effet, cette protection vise à protéger les pièces en plastique du radiateur électrique, de toute déformation ou inflammation. C'est une protection ultime et elle est active dans le cas d'une défaillance de l'électronique dû par exemple à un court-circuit

Du fait de la précontrainte élastique exercée sur la lame ressort 57, la fusion de la liaison thermofusible permet une détente de la lame ressort 57 et donc une ouverture franche de la liaison.

Etant directement exposé à l'air traversant le radiateur, la lame ressort 57 participe en partie au chauffage de l'air.

En outre, la lame ressort 57 présente une section inférieure ou égale et une résistivité supérieure ou égale à celle du ruban métallique 22. En conséquence, la densité du courant à travers la lame ressort 57 est supérieure à celle traversant le ruban 22 et donc la lame ressort 57 se chauffe plus vite que le ruban 22.

Autrement dit, le gradient thermique de la lame ressort 57 est supérieur à celui du ruban 22 et donc la lame est plus sensible aux changements de températures.

Au voisinage de la liaison thermofusible, la lame ressort 57 présente une température supérieure à celle du ruban 22 compensant ainsi tout écart de température tout au long du ruban 22.

Le matériau constitutif de la lame ressort ainsi que ses forme et dimension sont choisis en fonction de la conductivité électrique et thermique nécessaire pour satisfaire une protection optimale.

Le matériau peut être choisi parmi des métaux à forte résistivité électrique, comme un alliage de cuivre, tel par exemple le CuNi30. La lame ressort peut avoir une largeur d'environ 10 mm, une épaisseur d'environ 100 µm, une longueur comprise entre 15 mm et 30 mm et une résistance inférieure ou égale à 10 mΩ.

En outre des ouvertures (non représentées) en forme de persiennes peuvent être formées dans la lame ressort augmentant ainsi sa sensibilité thermique en cas de faible débit d'air.

Toutes ces caractéristiques font que l'élément de protection réagit assez rapidement à tout échauffement excessif du radiateur pour différents débits de flux d'air à travers le radiateur. La protection est valable lors d'une baisse progressive du flux d'air ou lors d'une coupure brutale du flux d'air.

En outre, l'élément de protection de la figure 8 peut faire office de fusible en cas de court-circuit du ruban métallique avec un potentiel électrique extérieur.

La figure 9 montre qu'une liaison thermofusible 58 peut aussi être formée par découpe d'un ruban 22 et raccordement de ses tronçons par brasage au moyen d'une brasure adaptée.

La figure 10 montre qu'on peut utiliser une protection réversible ou réarmable liée directement ou indirectement à chaque ruban métallique, contre un échauffement excessif défini par une température inférieure à celle correspondant au point de fusion de la liaison thermofusible.

Cette protection réversible peut être constituée d'un capteur ou détecteur thermique délivrant une information au circuit de commande, en adéquation avec la température du ruban métallique ou de la lame ressort afin que le circuit de commande coupe l'alimentation électrique au cas d'un échauffement excessif.

De préférence, le capteur ou détecteur thermique 61 est thermiquement lié, par exemple par une colle 63 ou résine thermique, à la lame ressort 57.

Le capteur ou détecteur thermique peut être de type connu en soi, tel un bilame ayant un seuil d'ouverture adapté, une résistance CTP, une résistance CTN, ou un interrupteur polymère à effet CTP relié directement ou indirectement au ruban métallique.

Avantageusement, la lame ressort peut possèder un effet CTP assurant ainsi, la fonction d'un capteur thermique.

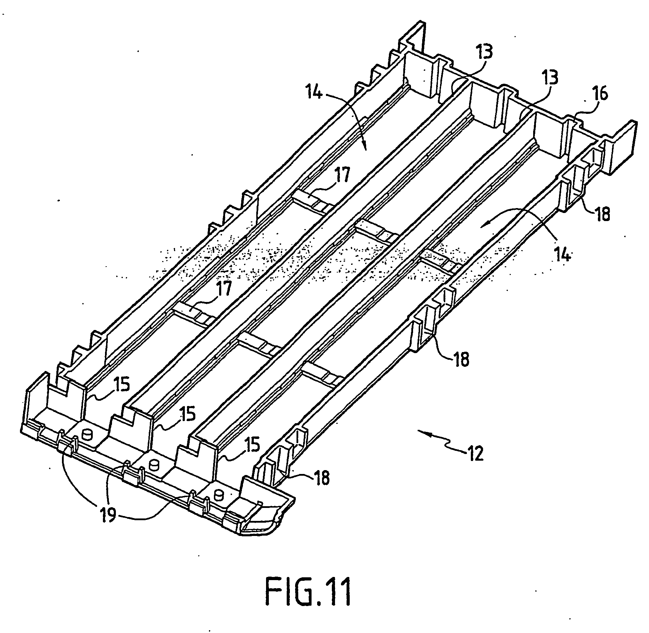

Les figures 11 à 13 en plus des figures 2 à 6 montrent le montage des modules chauffants individuels 20 dans le boîtier 12.

En effet, le boîtier est rectangulaire comportant des parois longitudinales 13 qui définissent entre elles un ensemble d'alvéoles 14. A titre d'exemple, la figure 11, montre trois alvéoles, destinées à accueillir et à maintenir en place trois modules chauffants individuels 20. Bien entendu, ce nombre n'est nullement limitatif et pourra être différent.

Chaque module chauffant 20 est calé dans l'alvéole 13 du boîtier 12 via les bords ou sommets du ruban métallique 22 contre les parois longitudinales 13.

Sur un côté transversal du boîtier 12, chaque paroi longitudinale 13 se termine par un retour ou rebord transversal 15 qui s'encastre dans une entaille 23 correspondante formée sur une extrémité de chaque support 40 du module chauffant individuel 20. Ceci assure un détrompage et un positionnement correct du module chauffant individuel 20 et de ses composants, en particulier interrupteur électronique. De même, au niveau du même côté transversal, des échancrures 19 sont formées pour ajuster le positionnement des modules chauffants individuels 20.

Le côté transversal opposé comporte des entailles 16 destinés à accueillir les extrémités des profilés 45 des modules chauffants individuels 20.

En outre, le boîtier peut comprendre des traverses centrales pour rigidifier le boîtier et pour mieux soutenir les modules chauffants individuels 20.

Un couvercle 39 comportant des ouvertures de mêmes formes et dimensions que les alvéoles 14 s'enfiche sur le boîtier 12. En effet, les parois longitudinales externes du boîtier 12 comportent des encoches 18 destinées à accueillir des clips ou agrafes 71 formés dans le couvercle 39.

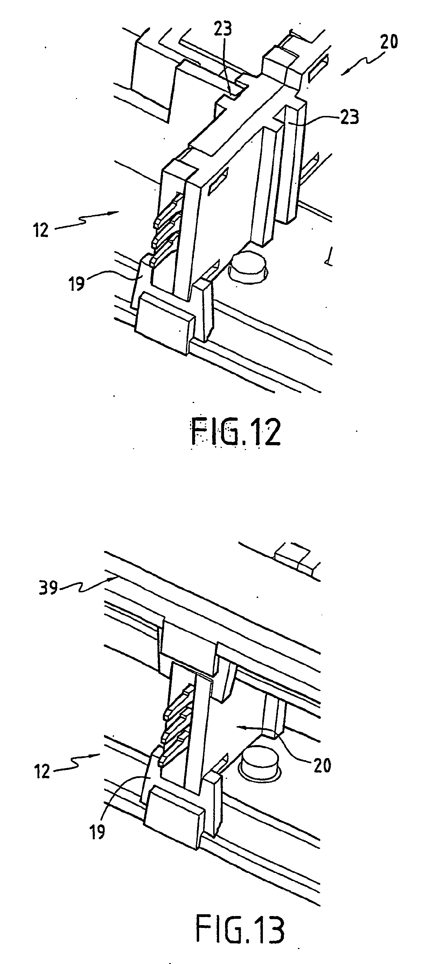

La face intérieure du couvercle 39 comporte un système de calage et de positionnement des modules chauffants, identique ou symétrique à celui du boîtier, comme il est montré sur la figure 13.

Le boîtier 12 et le couvercle délimitent par leurs alvéoles et ouvertures correspondantes, la section de passage de l'air à travers les rubans métalliques 22 et les interrupteurs électroniques 25. Ainsi, le flux d'air est chauffé par les rubans tout en refroidissant les interrupteurs électroniques.

Le boîtier 12, le couvercle 39, le capot 33 de même que les profilés 45 des modules chauffants 20 sont réalisés en un matériau isolant électrique, par exemple une matière plastique capable de supporter la température maximale atteinte en service, c'est-à-dire une température pouvant aller jusqu'à 150°C. Des matières plastiques utilisables sont par exemple les PBT, PPS, PPA, PA66, PA6, éventuellement renforcées par des fibres de verre. Le boîtier 12 peut être moulé en une seule pièce.

Les bus barres 35 sont fixés dans le boîtier 12 par boutrolage ou peuvent être sertis ou clippés sur le couvercle 39 et le boîtier 12. En variante les bus barres 35 peuvent être intégré dans le boîtier par surmoulage.

Les bus barres 35 peuvent être filetées afin de fixer des bornes de puissances 73 de l'alimentation électrique par un système d'écrous 41.

Par ailleurs, le radiateur électrique comporte des moyens de fixation 61 et de guidage afin de faciliter son montage et intégration dans un appareil de chauffage et climatisation.

En outre, le radiateur électrique comporte un cordon d'étanchéité afin de limiter les fuites aérauliques entre le canal qui amène l'air à chauffer et l'environnement extérieur.

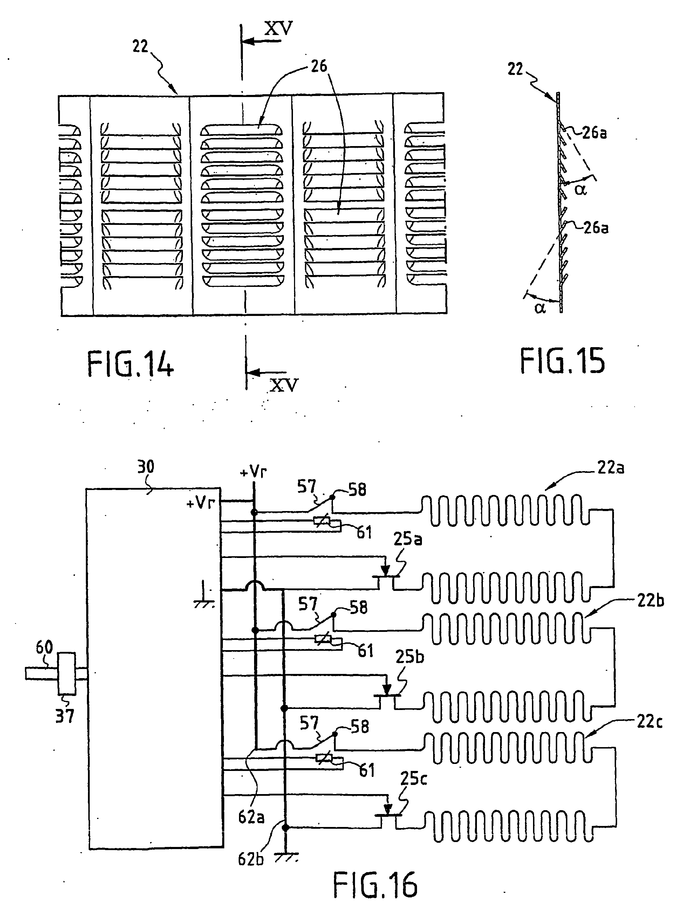

Les rubans métalliques 22 ont leurs faces principales disposées sensiblement parallèles à la direction d'écoulement du flux d'air à travers le boîtier 12, de manière à limiter la perte de charge due au passage de l'air dans le radiateur électrique. Afin d'accroître l'échange thermique entre les rubans et le flux d'air auquel ils sont directement exposés, des persiennes 26 (uniquement montrées sur les figures 14 et 15) peuvent éventuellement être formées dans les rubans. Les persiennes 26 sont réalisées par découpe d'ailettes 26a et déformation de celles-ci légèrement en dehors du plan des rubans.

Les persiennes permettent d'augmenter le rendement de l'échange thermique grâce aux turbulences créées au niveau des alvéoles des ailettes 26a. L'angle entre les ailettes et le plan du ruban est de préférence compris entre 20° et 35° afin d'obtenir un bon compromis entre l'efficacité recherchée des ailettes et la perte de charge qu'elles induisent par augmentation de la résistance aéraulique.

Les rubans 22 sont de préférence revêtus d'une couche ayant une fonction d'isolation électrique, par exemple un vernis isolant ou une résine telle qu'une résine époxy, pouvant éventuellement avoir également une fonction de protection contre la corrosion,

Le matériau constitutif des rubans 22 ainsi que leurs formes et dimensions sont choisis en fonction d'un certain nombre de contraintes ou caractéristiques comme la résistance électrique nécessaire pour satisfaire les besoins en puissance, la résistivité, la faisabilité, les paramètres géométriques du radiateur électrique, etc.

Le matériau peut être choisi parmi des métaux à forte résistivité électrique susceptibles d'être mis sous forme de feuillards dans lesquels des bandes peuvent être découpées et plissées pour former les rubans 22. De tels métaux sont notamment des alliages à base de fer ou de cuivre contenant notamment du nickel, et/ou de l'étain. De préférence, le matériau des rubans est constitué du CuNi30, du CuNi45, ou du CuNi18Zn20. Avantageusement, ces alliages peuvent avoir un effet de résistance à coefficient de température positif.

Les rubans métalliques peuvent avoir des formes sinusoïdales, triangulaires, rectangulaires, ou trapézoïdales.

Les formes et dimensions d'un ruban 22 peuvent être dictées par différentes considérations.

L'épaisseur du ruban doit être suffisante pour permettre le travail industriel du feuillard métallique, mais rester limitée pour ne pas engendrer une résistance aéraulique trop importante. Une valeur d'épaisseur comprise environ entre 50 µm et 250 µm est préférée.

Le pas ou période d'ondulation d'un ruban plissé, ne doit pas être trop faible au risque d'engendrer une résistance aéraulique trop importante. Par contre, au-delà d'une certaine valeur, un pas trop élevé pénalise la surface d'échange thermique sans apporter d'avantage sensible en terme de diminution de résistance aéraulique, c'est-à-dire de diminution de perte de charge entre les deux faces du radiateur. Une valeur de pas comprise environ entre 1,8 mm et 6 mm est préférée.

La largeur ainsi que la hauteur ou amplitude crête à crête entre ondulations dépendent de l'encombrement disponible pour le radiateur électrique. Par ailleurs, la largeur du ruban doit être suffisante pour assurer une tenue mécanique du ruban mais rester limitée pour éviter un encombrement trop important. Une valeur de largeur comprise environ entre 5 mm et 20 mm est préférée.

La hauteur ne doit pas être trop faible afin de ne pas favoriser une résistance aéraulique élevée. Cette hauteur doit par contre être limitée pour conserver une rigidité et une tenue suffisante du ruban. Une valeur de hauteur h comprise environ entre 5 mm et 20 mm est préférée.

La longueur d'un ruban plissé, c'est-à-dire la longueur du profilé, dépend de l'encombrement disponible pour le radiateur électrique. Dans un appareil de chauffage de véhicule automobile, cette longueur est couramment de une à quelques dizaines de cm.

Ainsi, l'architecture de base du radiateur électrique est formée par l'association d'un ensemble de modules chauffants individuels et standards. En effet, chaque module chauffant comporte toutes les fonctions lui permettant d'être indépendant des autres modules, c'est-à-dire qu'il comporte un ruban, un support de ruban, un interrupteur électronique et au moins un élément de protection thermique. De plus, la partie électronique de puissance des modules est dissociée de l'électronique de commande, permettant ainsi, de standardiser les modules chauffants.

La figure 16 est un schéma électrique du radiateur illustrant un circuit de commande 30, des interrupteurs électroniques 25a, 25b, 25c et des rubans métalliques 22a, 22b, 22c selon l'invention.

Le circuit de commande 30 reçoit à travers le connecteur 37 une information, par exemple de type logique, véhiculée par un bus de données 60 et représentative du niveau de puissance P calorifique demandée. Le circuit 30 est en outre relié à un bus d'énergie formé d'un conducteur 62a à potentiel de réseau +Vr disponible dans le véhicule, par exemple la tension de batterie, et d'un conducteur 62b porté au potentiel de référence (masse). En variante, le circuit 30 peut être alimenté en énergie via le connecteur 37 et alors sa connexion avec le conducteur 62a pourra être omise.

Dans l'exemple de la figure 16, les rubans sont au nombre de trois. Une borne de chaque ruban est reliée au conducteur 62b via son commutateur correspondant tandis que l'autre borne de chaque ruban est reliée au conducteur 62a via la liaison thermofusible 58 et la lame ressort 57. En outre un détecteur thermique 61, relié au circuit de commande, est monté au niveau de chaque lame ressort 57. Ainsi, chaque détecteur thermique délivre une information au circuit de commande, en adéquation avec la température de la lame ressort associée.

Au cas d'un échauffement excessif provenant d'une évacuation insuffisante des calories produites, par exemple quand le débit d'air traversant un module chauffant est inférieur à une valeur minimale, l'interrupteur électronique correspondant, piloté par le circuit de commande 30 interdit l'alimentation électrique du module chauffant.

Par ailleurs, de façon connue, un signal représentatif de la vitesse de rotation du pulseur peut être envoyé au circuit de commande 30 pour interdire l'alimentation électrique des modules chauffants individuels lorsque la vitesse de rotation du pulseur est inférieure à un seuil prédéterminé.

Il est possible de faire varier la puissance de façon continue ou quasi-continue en modulant la tension d'alimentation électrique des rubans métalliques, ou au moins de l'un d'eux. La modulation peut être réalisée de façon connue par modulation de largeur d'impulsions (PWM), la tension Vr étant découpée pour être délivrée aux rubans métalliques sous forme d'un train d'impulsions dans lequel le rapport entre largeur et période des impulsions est variable. Une alimentation simultanée modulée de l'ensemble des rubans métalliques permet, quel que soit le niveau de puissance P, de répartir de façon homogène l'émission calorifique dans toute la section de passage de l'air dans le radiateur électrique.

Le dispositif de chauffage électrique selon l'invention peut être mis en oeuvre dans des appareils de chauffage et/ou climatisation autres que ceux de la figure 1.

Ainsi, la figure 17 montre un appareil de chauffage et/ou climatisation pour véhicule automobile qui se distingue de celui de la figure 1 en ce que le radiateur 10 n'est pas situé à proximité de l'échangeur de chaleur 8, mais au voisinage immédiat d'une sortie de l'appareil de chauffage reliée par un conduit 4 à une bouche 4a de désembuage/dégivrage. Un radiateur conforme à l'invention pourrait aussi être monté au voisinage de la bouche 4a de désembuage/dégivrage, comme montré par la référence 10', ou au voisinage d'une bouche de chauffage 5a de l'habitacle reliée au canal 3 par un conduit 5 comme montré par la référence 10".

En outre, la figure 17 montre qu'un radiateur 10 conforme à l'invention peut être intégré à un dispositif de climatisation de véhicule automobile comprenant dans le canal 3 un évaporateur de circuit de réfrigération 9, en amont de l'échangeur de chaleur 8, occupant dans cet exemple une partie seulement de la section du canal.

## Revendications

1. Dispositif de chauffage électrique comportant un radiateur électrique (10) pour chauffer l'air le traversant, ledit radiateur comprenant un boîtier (12), au moins un élément résistif monté dans le boîtier et constitué par au moins un ruban métallique en zigzag (22) qui est déposé de manière à être exposé directement à l'air traversant le boîtier, et un circuit (30) de commande d'alimentation électrique du ou des éléments résistifs relié à une source d'alimentation,
tel que le radiateur électrique (10) comprend un ensemble de modules chauffants (20) individuels disposés parallèlement les uns aux autres dans le boîtier (12) et de manière à être exposés directement à l'air traversant le boîtier, chaque module chauffant (20) comprenant un ruban métallique plissé ou ondulé (22) et un interrupteur électronique (25) commandé par le circuit de commande (30) destiné à interdire sélectivement l'alimentation électrique du ruban métallique (22), **caractérisé en ce que** chaque module chauffant comprend en outre un support (40) électriquement isolant comprenant un profilé (45) destiné à accueillir et à maintenir en position ledit ruban métallique (22) et intégrant un support métallique de connexion (50) reliée à la source d'alimentation électrique permettant l'alimentation électrique du ruban métallique (22).

2. Dispositif selon la revendication 1, **caractérisé en ce que** le profité (45) présente des ailes (45a, 45b) entre lesquelles les sommets des ondulations sont maintenus latéralement et des séparations (46) pour maintenir une certaine régularité du pas du ruban métallique ondulé ou plissé (22).

3. Dispositif selon l'une quelconque des revendications 1 à 2, **caractérisé en ce que** le module chauffant (20) comporte au moins un élément de protection thermique et électrique, exposé directement à l'air traversant le module chauffant et en série avec le ruban métallique (22).

4. Dispositif selon la revendication 3, **caractérisé en ce que** l'élément de protection comporte au moins une liaison thermofusible (58) en série avec un ruban métallique (22).

5. Dispositif selon la revendication 3, **caractérisé en ce que** l'élément de protection comprend une lame ressort (57) et une liaison thermofusible (58) formée par une brasure entre une extrémité du ruban métallique (22) et une extrémité de la lame ressort (57), l'autre extrémité de la lame ressort étant solidaire du support (40) et connectée électriquement à une borne 56.

6. Dispositif selon l'une quelconque des revendications 4 et 5, **caractérisé en ce que** la brasure de la liaison thermofusible (58) présente un point de fusion en adéquation avec une limite supérieure de température.

7. Dispositif selon la revendication 6, **caractérisé en ce que** la brasure de la liaison thermofusible (58) est formée par une soudure eutectique.

8. Dispositif selon la revendication 5, **caractérisé en ce que** la lame ressort (57) est exposée directement à l'air traversant le module chauffant (20) et des ouvertures en forme de persiennes sont formées dans la lame ressort (57).

9. Dispositif selon l'une quelconque des revendications 5 à 8, **caractérisé en ce que** la lame ressort (57) présente une section inférieure ou égaie à celle du ruban métallique (22).

10. Dispositif selon l'une quelconque des revendications 5 à 9, **caractérisé en ce que** la lame ressort (57) présente une résistivité supérieure ou égale à celle du ruban métallique (22).

11. Dispositif selon l'une quelconque des revendications 1 à 10, **caractérisé en ce que** l'interrupteur électronique (25) est intégré sur le support métallique de connexion (50) à travers des pistes formées par ledit support.

12. Dispositif selon l'une quelconque des revendications 10 et 11, **caractérisé en ce que** des ailes (52) sont formées dans le support métallique de connexion (50) facilitant la dissipation de chaleur de interrupteur électronique (25) par l'air traversant le module chauffant (20).

13. Dispositif selon l'une quelconque des revendications 5 à 12, **caractérisé en ce que** l'extrémité de la lame ressort (57) solidaire du support isolant (40) étant soudé de manière permanente à la borne de connexion (56) indépendante électriquement du support métallique de connexion (50) permettant ainsi le raccordement électrique du ruban ou de la lame ressort à une borne externe ou bus barre (35).

14. Dispositif selon l'une quelconque des revendications 1 à 13, **caractérisé en ce que** chaque module chauffant (20) comporte en outre au moins une protection de type réversible ou réarmable (61) liée directement ou indirectement au ruban métallique (22) prévenant un échauffement excessif.

15. Dispositif selon la revendication 14, **caractérisé en ce que** la protection réversible (61) étant un capteur ou détecteur thermique délivrant une information au circuit de commande (30), en adéquation avec la température du ruban métallique (22) ou de la lame ressort (57) afin que le circuit de commande (30) coupe l'alimentation électrique au cas d'un échauffement excessif.

16. Dispositif selon la revendication 15, **caractérisé en ce que** le capteur ou détecteur thermique est thermiquement lié à la lame ressort (57).

17. Dispositif selon rune quelconque des revendications 15 et 16, **caractérisé en ce que** le capteur ou détecteur thermique comprend un élément choisi parmi une résistance CTN, une résistance CTP, un bilame et un interrupteur polymère à effect CTP.

18. Dispositif selon l'une quelconque des revendications 5 à 16, **caractérisé en ce qu'**en outre la lame ressort (57) possède un effet CTP assurant ainsi, la fonction d'un capteur thermique.

19. Dispositif selon l'une quelconque des revendications 1 à 18, **caractérisé en ce que** chaque module chauffant (20) présente une puissance de chauffe comprise entre 0 et 500W et de préférence entre 300W et 400W.

20. Dispositif selon l'une quelconque des revendications 1 à 19, **caractérisé en ce que** le boîtier (12) comporte un ensemble d'alvéoles (14) destinées à accueillir et à maintenir en place chaque module chauffant (20).

21. Dispositif selon la revendication 20, **caractérisé en ce que** le boîtier (12) reçoit un couvercle (39).

22. Dispositif selon l'une quelconque des revendications 1 à 21, **caractérisé en ce que** le circuit de commande (30) comporte des moyens de variation de la puissance fournie par le radiateur par modulation de la tension d'alimentation délivrée à chaque module chauffant (20).

23. Dispositif selon la revendication 22, **caractérisé en ce que** le circuit de commande (30) comporte des moyens de variation de la puissance fournie par modulation de largeur d'impulsions.

24. Dispositif selon l'une quelconque des revendications 1 à 23, **caractérisé en ce que** les différents modules chauffants (20) comportent des rubans métalliques (22) ayant des résistances sensiblement identiques.

25. Dispositif selon l'une quelconque des revendications 1 à 24, **caractérisé en ce que** chaque, ruban métallique (22) de chaque module chauffant (20) présente une période d'ondulation de longueur comprise entre 1,8 mm et 6 mm.

26. Dispositif selon l'une quelconque des revendications 1 à 25, **caractérisé en ce que** chaque ruban métallique (22) de chaque module chauffant présente une amplitude crête à crête entre sommets d'ondulations comprise entre 5 mm et 20 mm.

27. Dispositif selon l'une quelconque des revendications 1 à 26, **caractérisé en ce que** chaque ruban métallique (22) de chaque module chauffant a une largeur comprise entre 5 mm et 20 mm.

28. Dispositif selon l'une quelconque des revendications 1 à 27, **caractérisé en ce que** chaque ruban métallique (22) de chaque module chauffant a une épaisseur comprise entre 50 µm et 250 µm et de préférence entre 80 µm et 180 µm.

29. Dispositif selon l'une quelconque des revendications 1 à 28, **caractérisé en ce que** chaque ruban métallique (22) de chaque module chauffant est en un matériau choisi parmi un alliage à base de fer et un alliage à base de cuivre.

30. Dispositif selon la revendication 29, **caractérisé en ce que** l'alliage à base de cuivre est un alliage choisi parmi le CuNi30, le CuNi45 et le CuNi18Zn20.

31. Dispositif selon la revendication 29, **caractérisé en ce que** le matériau est un alliage présentant un effet de résistance à coefficient de température positif.

32. Dispositif selon l'une quelconque des revendications 1 à 31, **caractérisé en ce que** des ouvertures en forme de persiennes (26) sont formées dans chaque ruban (22).

33. Dispositif selon la revendication 32, **caractérisé en ce que** les persiennes (26) comportent des ailettes (26a) qui forment un angle compris entre 20° et 35° par rapport au plan du ruban (22).

34. Dispositif selon l'une quelconque des revendications 1 à 33, **caractérisé en ce que** chaque ruban (22) est muni d'un revêtement isolant électrique et/ou de protection contre la corrosion.

35. Dispositif selon l'une quelconque des revendications 1 à 33, **caractérisé en ce que** chaque ruban métallique (22) présente un profil choisi parmi, un profil sinusoïdal, un profil triangulaire, un profil rectangulaire et un profil trapézoïdal.

36. Dispositif selon l'une quelconque des revendications 1 à 35, comprenant en outre un générateur (7) de flux d'air, **caractérisé en ce que** les interrupteurs électroniques (25) pilotés par le circuit de commande (30) interdisent l'alimentation électrique des modules chauffants (20) lorsque le débit d'air traversant le radiateur (10) est inférieur à une valeur minimale, afin d'assurer une protection contre un échauffement excessif.

37. Dispositif selon la revendication 36, dans lequel le générateur (7) de flux d'air comporte un pulseur (3), **caractérisé en ce que** des moyens sont prévus pour fournir au circuit de commande (30) un signal représentatif de la vitesse de rotation du pulseur pour interdire l'alimentation électrique des modules chauffants lorsque la vitesse de rotation du pulseur est inférieure à un seuil prédéterminé.

38. Appareil de chauffage ou climatisation pour véhicule automobile, **caractérisé en ce qu'**il comporte un dispositif de chauffage selon l'une quelconque des revendications 1 à 37.

39. Appareil selon la revendication 38, **caractérisé en ce qu'**il comporte un radiateur électrique disposé en aval d'un échangeur de chaleur à liquide dans un canal de circulation d'air.

40. Appareil selon l'une quelconque des revendications 38 et 39, **caractérisé en ce que** le radiateur électrique est disposé à proximité d'une bouche de sortie d'air.

## Claims

1. Electric heating device comprising an electric radiator (10) heating the air which penetrates said radiator, said radiator comprising a housing (12), at least one resistive element mounted in the housing and is formed by at least one zigzag-shaped metal ribbon (22) which is arranged in such a way as to be directly exposed to the air penetrating the housing, and a circuit (30) controlling the electric power of the resistive element(s) connected to a source of power,
**characterised in that** the electric radiator (10) comprises a set of individual heating modules (20) arranged parallel to each other in the housing (12) and in such a way as to be directly exposed to the air penetrating the housing, each heating module (20) comprising a folded or undular metal ribbon (22), an electronic interrupter (25) controlled by the control circuit (30) intended to selectively block the supply of electric power to the metal ribbon (22) and an electrically-insulated support (40) comprising a section (45) intended to receive and maintain in position said metal ribbon (22) and incorporating a metal connecting support (50) connected to the source of electric power allowing the supply of electric power to the metal ribbon (22).

2. Device according to claim 1, **characterised in that** the section (45) has wings (45a, 45b) wherein between the wave crests are maintained laterally and separations (46) in order to maintain a certain regularity in the pitch of the folded or undular metal ribbon (22).

3. Device according to any of claims 1 to 2, **characterised in that** the heating module (20) includes at least one thermal and electric protective element, directly exposed to the air penetrating the heating module and in series with the metal ribbon (22).

4. Device according to claim 3, **characterised in that** the protective element includes at least one thermofusible link (58) in series with a metal ribbon (22).

5. Device according to claim 3, **characterised in that** the protective element comprises a spring blade (57) and a thermofusible link (58) formed by a brazing between an end of the metal ribbon (22) and an end of the spring blade (57), with the other end of the spring blade being integral with the support (40) and electrically connected to a terminal 56.

6. Device according to any of claims 4 and 5, **characterised in that** the brazing of the thermofusible link (58) has a fusing point that is adequate with an upper temperature limit.

7. Device according to claim 6, **characterised in that** the brazing of the thermofusible link (58) is formed by a eutectic soldering.

8. Device according to claim 5, **characterised in that** the spring blade (57) is directly exposed to the air penetrating the heating module (20) and openings in the form of louvers are formed in the spring blade (57).

9. Device according to any of claims 5 to 8, **characterised in that** the spring blade (57) has a section less than or equal to that of the metal ribbon (22).

10. Device according to any of claims 5 to 9, **characterised in that** the spring blade (57) has a resistivity that is greater than or equal to that of the metal ribbon (22).

11. Device according to any of claims 1 to 10, **characterised in that** the electronic interrupter (25) is incorporated on the metal connecting support (50) through tracks formed by said support.

12. Device according to any of claims 10 and 11, **characterised in that** wings (52) are formed in the metal connecting support (50) facilitating the dissipation of heat from the electronic interrupter (25) via the air penetrating the heating module (20).

13. Device according to any of claims 5 to 12, **characterised in that** the end of the spring blade (57) integral with the insulating support (40) being permanently soldered to the connection terminal (56) electrically independent of the metal connecting support (50) as such making possible the electrical connection of the ribbon or of the spring blade to an external terminal or bus bar (35).

14. Device according to any of claims 1 to 13, **characterised in that** each heating module (20) further comprises at least one protection of the reversible or resettable type (61) directly or indirectly connected to the metal ribbon (22) preventing excessive heating.

15. Device according to claim 14, **characterised in that** the reversible protection (61) is a thermal detector or sensor delivering information to the control circuit (30), in adequacy with the temperature of the metal ribbon (22) or of the spring blade (57) so that the control circuit (30) cuts off the supply of electric power in the event of excessive heating.

16. Device according to claim 15, **characterised in that** the thermal detector or sensor is thermally connected to the spring blade (57).

17. Device according to any of claims 15 and 16, **characterised in that** the thermal detector or sensor comprises an element chosen from among an NTC resistor, a PTC resistor, a thermal switch and a PTC effect polymer interrupter.

18. Device according to any of claims 5 to 16, **characterised in that** the spring blade (57) further has a PTC effect providing as such, the function of a thermal sensor.

19. Device according to any of claims 1 to 18, **characterised in that** each heating module (20) has a heating power between 0 and 500W and preferably between 300W and 400W.

20. Device according to any of claims 1 to 19, **characterised in that** the housing (12) comprises a set of cells (14) intended to receive and maintain in place each heating module (20).

21. Device according to claim 20, **characterised in that** the housing (12) receives a cover (39).

22. Device according to any of claims 1 to 21, **characterised in that** the control circuit (30) comprises means for varying the power provided by the radiator by modulating the supply voltage delivered to each heating module (20).

23. Device according to claim 22, **characterised in that** the control circuit (30) comprises means for varying the power provided by pulse width modulation.

24. Device according to any of claims 1 to 23, **characterised in that** the various heating modules (20) comprise metal ribbons (22) with substantially identical resistances.

25. Device according to any of claims 1 to 24, **characterised in that** each metal ribbon (22) of each heating module (20) has a wave period with a length between 1.8 mm and 6 mm.

26. Device according to any of claims 1 to 25, **characterised in that** each metal ribbon (22) of each heating module has a peak-to-peak amplitude between wave crests between 5 mm and 20 mm.

27. Device according to any of claims 1 to 26, **characterised in that** each metal ribbon (22) of each heating module has a length between 5 mm and 20 mm.

28. Device according to any of claims 1 to 27, **characterised in that** each metal ribbon (22) of each heating module has a thickness between 50 µm and 250 µm and preferably between 80 µm and 180 µm.

29. Device according to any of claims 1 to 28, **characterised in that** each metal ribbon (22) of each heating module is made of a material chosen from among an iron-based alloy and a copper-based alloy.

30. Device according to claim 29, **characterised in that** the copper-based alloy is an alloy chosen from among CuNi30, CuNi45 and CuNi18Zn20.

31. Device according to claim 29, **characterised in that** the material is an alloy having a positive temperature coefficient resistance effect.

32. Device according to any of claims 1 to 31, **characterised in that** openings in the form of louvers (26) are formed in each ribbon (22).

33. Device according to claim 32, **characterised in that** the louvers (26) include fins (26a) which form an angle between 20° and 35° in relation to the plane of the ribbon (22).

34. Device according to any of claims 1 to 33, **characterised in that** each ribbon (22) is provided with an electrically-insulating coating and/or protection against corrosion.

35. Device according to any of claims 1 to 33, **characterised in that** each metal ribbon (22) has a profile chosen from among a sinusoidal profile, a triangular profile, a rectangular profile and a trapezoidal profile.

36. Device according to any of claims 1 to 35, further comprising an air flow generator (7), **characterised in that** the electronic interrupters (25) controlled by the control circuit (30) blocking the supply of electric power to the heating modules (20) when the flow of air penetrating the radiator (10) is less than a minimum value, in order to provide a protection against excessive heating.

37. Device according to claim 36, wherein the air flow generator (7) includes a pulser (3), **characterised in that** means are provided to provide the control circuit (30) with a signal representing the rotating speed of the pulser in order to block the supply of electric power to the heating modules when the rotating speed of the pulser is less than a predetermined threshold.

38. Air conditioning or heating device for motor vehicle, **characterised in that** it comprises a heating device according to any of claims 1 to 37.

39. Device according to claim 38, **characterised in that** it comprises an electric radiator arranged downstream of a liquid heat exchanger in an air circulation channel.

40. Device according to any of claims 38 and 39, **characterised in that** the electric radiator is arranged in the vicinity of an air outlet.

## Patentansprüche

1. Elektrische Heizvorrichtung, umfassend einen elektrischen Heizkörper (10) zum Erwärmen der durch diesen hindurch strömenden Luft, wobei der Heizkörper ein Gehäuse (12), mindestens ein Widerstandselement, das in dem Gehäuse eingebaut ist und aus mindestens einem Zickzack-Metallband (22) besteht, das derart angeordnet ist, dass es direkt der durch das Gehäuse strömenden Luft ausgesetzt ist, und eine mit einer Versorgungsquelle verbundene Steuerschaltung (30) zur Stromversorgung des oder der Widerstandselemente umfasst,
**dadurch gekennzeichnet, dass** der elektrische Heizkörper (10) eine Anordnung von einzelnen Heizmodulen (20) umfasst, die in dem Gehäuse (12) zueinander parallel angeordnet sind, und zwar derart, dass sie direkt der durch das Gehäuse strömenden Luft ausgesetzt sind, wobei jedes Heizmodul (20) ein gefaltetes oder gewelltes Metallband (22), einen elektronischen Schalter (25), der von der Steuerschaltung (30) gesteuert wird, die dazu gedacht ist, die Stromversorgung des Metallbandes (22) selektiv zu untersagen, und einen elektrisch isolierenden Träger (40), der ein Profil (45) umfasst, das dazu gedacht ist, das Metallband (22) aufzunehmen und an Ort und Stelle zu halten und einen metallischen Anschlussträger (50) integriert, der mit der elektrischen Versorgungsquelle verbunden ist, welche die Stromversorgung des Metallbandes (22) ermöglicht, umfasst.

2. Vorrichtung nach Anspruch 1, **dadurch gekennzeichnet, dass** das Profil (45) Flügel (45a, 45b), zwischen denen die Spitzen der Wellungen seitlich gehalten werden, und Abtrennungen (46) zum Einhalten einer gewissen Regelmäßigkeit des Abstands des gewellten oder gefalteten Metallbandes (22) aufweist.

3. Vorrichtung nach einem der Ansprüche 1 bis 2, **dadurch gekennzeichnet, dass** das Heizmodul (20) mindestens ein thermisches und elektrisches Schutzelement umfasst, das der durch das Heizmodul strömenden Luft direkt ausgesetzt ist und mit dem Metallband (22) in Reihe geschaltet ist.

4. Vorrichtung nach Anspruch 3, **dadurch gekennzeichnet, dass** das Schutzelement mindestens eine heißschmelzende Verbindung (58) in Reihe mit einem Metallband (22) umfasst.

5. Vorrichtung nach Anspruch 3, **dadurch gekennzeichnet, dass** das Schutzelement ein Federblatt (57) und eine heißschmelzende Verbindung (58), die durch eine Lötstelle zwischen einem Ende des Metallbandes (22) und einem Ende des Federblattes (57) gebildet ist, umfasst, wobei das andere Ende des Federblattes mit dem Träger (40) fest verbunden ist und elektrisch an eine Klemme (56) angeschlossen ist.

6. Vorrichtung nach einem der Ansprüche 4 und 5, **dadurch gekennzeichnet, dass** die Lötstelle der heißschmelzenden Verbindung (58) einen Schmelzpunkt aufweist, der für eine obere Temperaturgrenze angemessen ist.

7. Vorrichtung nach Anspruch 6, **dadurch gekennzeichnet, dass** die Lötstelle der heißschmelzenden Verbindung (58) durch eutektisches Schweißen gebildet wird.

8. Vorrichtung nach Anspruch 5, **dadurch gekennzeichnet, dass** das Federblatt (57) direkt der Luft ausgesetzt ist, die durch das Heizmodul (20) strömt, und schlitzförmige Öffnungen in dem Federblatt (57) gebildet sind.

9. Vorrichtung nach einem der Ansprüche 5 bis 8, **dadurch gekennzeichnet, dass** das Federblatt (57) einen Querschnitt aufweist, der kleiner oder gleich dem des Metallbandes (22) ist.

10. Vorrichtung nach einem der Ansprüche 5 bis 9, **dadurch gekennzeichnet, dass** das Federblatt (57) einen spezifischen Widerstand aufweist, der größer oder gleich demjenigen des Metallbandes (22) ist.

11. Vorrichtung nach einem der Ansprüche 1 bis 10, **dadurch gekennzeichnet, dass** der elektronische Schalter (25) auf dem metallischen Anschlussträger (50) durch von dem Träger gebildete Spuren integriert ist.

12. Vorrichtung nach einem der Ansprüche 10 und 11, **dadurch gekennzeichnet, dass** Flügel (52) in dem metallischen Anschlussträger (50) gebildet sind, welche die Wärmeableitung von dem elektronischen Schalter (25) durch die Luft, die durch das Heizmodul (20) strömt, erleichtern.

13. Vorrichtung nach einem der Ansprüche 5 bis 12, **dadurch gekennzeichnet, dass** das Ende des Federblattes (57), das mit dem isolierenden Träger (40) fest verbunden ist, dauerhaft an die elektrisch unabhängige Anschlussklemme (56) des metallischen Anschlussträgers (50) angeschweißt ist und somit den elektrischen Anschluss des Bandes oder des Federblattes an eine externe Klemme oder eine Sammelschiene (35) ermöglicht.

14. Vorrichtung nach einem der Ansprüche 1 bis 13, **dadurch gekennzeichnet, dass** jedes Heizmodul (20) ferner mindestens eine Schutzvorkehrung (61) umkehrbarer oder rückstellbarer Art umfasst, die direkt oder indirekt mit dem Metallband (22) verbunden ist und eine übermäßige Erwärmung verhindert.

15. Vorrichtung nach Anspruch 14, **dadurch gekennzeichnet, dass** die umkehrbare Schutzvorkehrung (61) ein Wärmefühler oder Wärmedetektor ist, welcher an die Steuerschaltung (30) eine Information abgibt, die für die Temperatur des Metallbandes (22) oder des Federblattes (57) angemessen ist, damit die Steuerschaltung (30) die Stromversorgung im Falle einer übermäßigen Erwärmung abschaltet.

16. Vorrichtung nach Anspruch 15, **dadurch gekennzeichnet, dass** der Wärmefühler oder Wärmedetektor mit dem Federblatt (57) thermisch verbunden ist.

17. Vorrichtung nach einem der Ansprüche 15 und 16, **dadurch gekennzeichnet, dass** der Wärmefühler oder Wärmedetektor ein Element umfasst, das aus einem CTN-Widerstand, einem CTP-Widerstand, einem Bimetallstreifen und einem Polymerschalter mit CTP-Effekt ausgewählt wird.

18. Vorrichtung nach einem der Ansprüche 5 bis 16, **dadurch gekennzeichnet, dass** ferner das Federblatt (57) einen CTP-Effekt besitzt und dadurch die Funktion eines Wärmefühlers erfüllt.

19. Vorrichtung nach einem der Ansprüche 1 bis 18, **dadurch gekennzeichnet, dass** jedes Heizmodul (20) eine Heizleistung aufweist, die zwischen 0 und 500 W und bevorzugt zwischen 300 W und 400 W liegt.

20. Vorrichtung nach einem der Ansprüche 1 bis 19, **dadurch gekennzeichnet, dass** das Gehäuse (12) eine Anordnung von Zellen (14) umfasst, die dazu gedacht sind, jedes Heizmodul (20) aufzunehmen und an Ort und Stelle zu halten.

21. Vorrichtung nach Anspruch 20, **dadurch gekennzeichnet, dass** das Gehäuse (12) mit einem Deckel (39) versehen ist.

22. Vorrichtung nach einem der Ansprüche 1 bis 21, **dadurch gekennzeichnet, dass** die Steuerschaltung (30) Mittel zum Ändern der Leistung umfasst, die von dem Heizkörper geliefert wird, und zwar durch Modulation der Versorgungsspannung, die an jedes Heizmodul (20) abgegeben wird.

23. Vorrichtung nach Anspruch 22, **dadurch gekennzeichnet, dass** die Steuerschaltung (30) Mittel zum Ändern der gelieferten Leistung durch Pulsweitenmodulation umfasst.

24. Vorrichtung nach einem der Ansprüche 1 bis 23, **dadurch gekennzeichnet, dass** die verschiedenen Heizmodule (20) Metallbänder (22) umfassen, die im Wesentlichen identische Widerstände aufweisen.

25. Vorrichtung nach einem der Ansprüche 1 bis 24, **dadurch gekennzeichnet, dass** jedes Metallband (22) jedes Heizmoduls (20) eine Wellenperiode aufweist, deren Länge zwischen 1,8 mm und 6 mm liegt.

26. Vorrichtung nach einem der Ansprüche 1 bis 25, **dadurch gekennzeichnet, dass** jedes Metallband (22) jedes Heizmoduls eine Doppelamplitude zwischen den Wellenspitzen aufweist, die zwischen 5 mm und 20 mm liegt.

27. Vorrichtung nach einem der Ansprüche 1 bis 26, **dadurch gekennzeichnet, dass** jedes Metallband (22) jedes Heizmoduls eine Breite aufweist, die zwischen 5 mm und 20 mm liegt.

28. Vorrichtung nach einem der Ansprüche 1 bis 27, **dadurch gekennzeichnet, dass** jedes Metallband (22) jedes Heizmoduls eine Dicke aufweist, die zwischen 50 µm und 250 µm und bevorzugt zwischen 80 µm und 180 µm liegt.

29. Vorrichtung nach einem der Ansprüche 1 bis 28, **dadurch gekennzeichnet, dass** jedes Metallband (22) jedes Heizmoduls aus einem Material besteht, das aus einer Legierung auf Eisenbasis und einer Legierung auf Kupferbasis ausgewählt wird.

30. Vorrichtung nach Anspruch 29, **dadurch gekennzeichnet, dass** die Legierung auf Kupferbasis eine Legierung ist, die aus CuNi30, CuNi45 und CuNi18Zn20 ausgewählt wird.

31. Vorrichtung nach Anspruch 29, **dadurch gekennzeichnet, dass** das Material eine Legierung ist, die einen Widerstandseffekt mit positivem Temperaturkoeffizient aufweist.

32. Vorrichtung nach einem der Ansprüche 1 bis 31, **dadurch gekennzeichnet, dass** schlitzförmige Öffnungen (26) in jedem Band (22) gebildet sind.

33. Vorrichtung nach Anspruch 32, **dadurch gekennzeichnet, dass** die Schlitze (26) Rippen (26a) umfassen, die im Verhältnis zur Ebene des Bandes (22) einen Winkel bilden, der zwischen 20° und 35° liegt.

34. Vorrichtung nach einem der Ansprüche 1 bis 33, **dadurch gekennzeichnet, dass** jedes Band (22) mit einer elektrisch isolierenden Beschichtung und/oder einer Korrosionsschutzbeschichtung versehen ist.

35. Vorrichtung nach einem der Ansprüche 1 bis 33, **dadurch gekennzeichnet, dass** jedes Metallband (22) ein Profil aufweist, das aus einem sinusförmigen Profil, einem dreieckigen Profil, einem rechteckigen Profil und einem trapezförmigen Profil ausgewählt wird.

36. Vorrichtung nach einem der Ansprüche 1 bis 35, ferner umfassend einen Luftstromgenerator (7), **dadurch gekennzeichnet, dass** die elektronischen Schalter (25), die von der Steuerschaltung (30) angesteuert werden, die Stromversorgung der Heizmodule (20) untersagen, wenn der Durchsatz der durch den Heizkörper (10) strömenden Luft geringer als ein Mindestwert ist, um einen Schutz vor übermäßiger Erwärmung sicherzustellen.

37. Vorrichtung nach Anspruch 36, wobei der Luftstromgenerator (7) einen Impulsgeber (3) umfasst, **dadurch gekennzeichnet, dass** Mittel bereitgestellt werden, um der Steuerschaltung (30) ein Signal zu liefern, das die Drehzahl des Impulsgebers darstellt, um die Stromversorgung der Heizmodule zu untersagen, wenn die Drehzahl des Impulsgebers kleiner als eine vorherbestimmte Schwelle ist.

38. Heizungs- oder Klimagerät für Kraftfahrzeuge, **dadurch gekennzeichnet, dass** es eine Heizvorrichtung nach einem der Ansprüche 1 bis 37 umfasst.

39. Gerät nach Anspruch 38, **dadurch gekennzeichnet, dass** es einen elektrischen Heizkörper umfasst, der oberhalb eines Flüssigkeits-Wärmetauschers in einem Luftumlaufkanal angeordnet ist.

40. Gerät nach einem der Ansprüche 38 und 39, **dadurch gekennzeichnet, dass** der elektrische Heizkörper in der Nähe eines Luftabzugs angeordnet ist.
